# EUROPEAN PATENT SPECIFICATION

(11) **EP 2 974 977 B1**
(45) Date of publication and mention of the grant of the patent: **19.04.2017**
(21) Application number: 15176671.4
(22) Date of filing: 14.07.2015
(51) Int. Cl.: B65D 63/10

(54) **IN-LINE CABLE TIE WITH FLEXIBLE HEAD**
LINEARER KABELBINDER MIT FLEXIBLEM KOPF
ATTACHE DE CÂBLE EN LIGNE À TÊTE FLEXIBLE

(30) Priority: 15.07.2014 US 201462024612 P
(43) Date of publication of application: 20.01.2016
(73) Proprietor: Thomas & Betts International, LLC, Wilmington, DE 19809 (US)
(72) Inventor: DINH, Cong T., COLLIERVILLE, TN Tennessee 38017 (US)
(74) Representative: EP&C

(56) References cited:
- EP-A1- 1 818 275
- GB-A- 1 287 651
- US-A- 5 745 957
- US-A1- 2002 083 559

## Description

### FIELD OF THE INVENTION:

The present invention relates to cable ties used to bundle an article or a group of articles. More specifically, the present invention relates to low profile cable ties having a flexible head.

### BACKGROUND OF THE INVENTION:

The use of cable ties to bundle or secure a group of articles is well known. Known cable ties of conventional construction are elongate members having a head at one end, a tail at the other end, and a longitudinal strap therebetween. The strap is wrapped around a bundle of articles and the tail is inserted through an aperture or passageway in the head. The head of the cable tie typically includes a locking element which is engageable with the body of the strap so that when the tail is pulled through the passageway in the head, the locking element secures the strap body in the head.

In certain situations, low profile cable ties are preferred as they sit low to the bundle and resist snagging. To maintain the low profile, the strap is inserted into the head in a direction substantially parallel to the strap body. An example of such a low-profile cable tie is disclosed in US 5,745,957.

Conventional cable tie tools are used to pull the tail of the cable tie through the head of traditional cable ties. These tools typically cannot be effectively used on low profile cable ties.

Moreover, in such cable ties it is desirable to maintain a low insertion force for the tail into the head and a high retention force resisting withdrawal.

### SUMMARY OF THE INVENTION:

The object is solved by a cable tie according to claim 1. A low profile tie includes an elongate strap having a tail at one end. A locking head positioned at the other end of the strap has a passageway therethrough for insertable receipt of the tail. The strap includes a planar strap surface between said tail and the locking head having a plurality of notches therealong. The locking head includes a base portion and a head portion flexibly connected to the base portion with the passageway formed therebetween. The head portion includes a plurality of locking teeth extending into the passageway for engagement with the notches of said strap body upon the insertion of said tail. The notches engage a number of teeth less than all of the locking teeth upon the insertion of the strap into said passageway. The head is flexibly pivotal so that more than the locking teeth engage the notches upon an attempt to withdraw said strap from said head.

### BRIEF DESCRIPTION OF THE DRAWINGS:

Figure 1 is a perspective showing of the low profile cable tie of the present invention.
Figure 2 is a partial plan view of the cable tie of Figure 1.
Figure 3 is a partial perspective showing of the cable tie of Figure 1 in the bundled position.
Figure 4 shows the cable tie of Figure 1 in the tail insertion position.
Figure 5 shows the cable tie of Figure 1 in the tail tensioned position.

### DETAILED DESCRIPTION OF THE PREFERRED EMBODIMENTS:

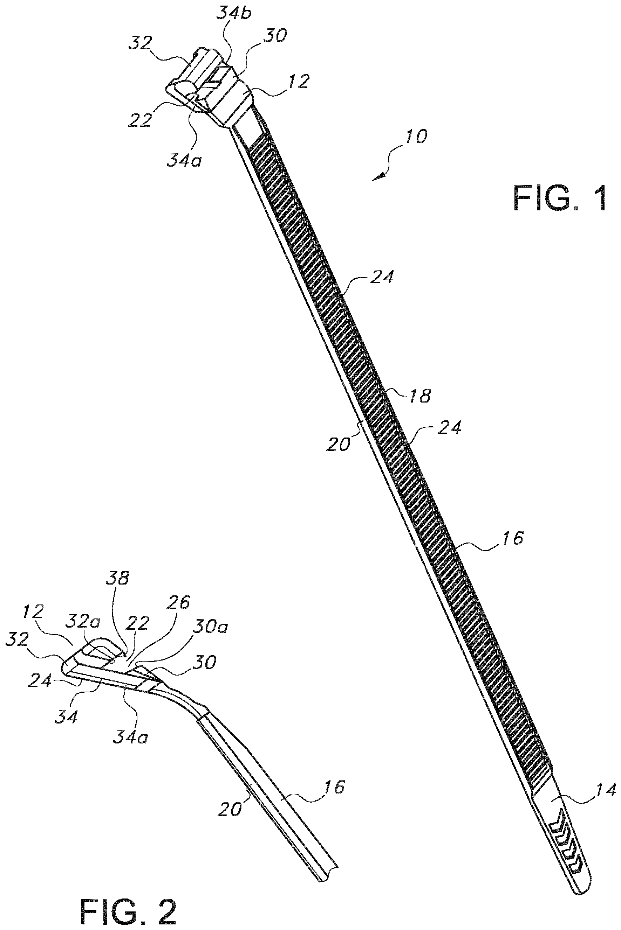

Figures 1-5 show a cable tie 10 of the present invention. Cable tie 10 is an elongate member including a locking head 12, an opposed tail 14, and an elongate strap body 16 therebetween. Strap body 16 is typically planar shaped having first and second opposed major surface 18 and 20. Head 12 includes passageway 22 therethrough. Passageway 22 includes strap ingress end 24 and strap egress end 26. Strap surface 18 includes a plurality of spaced apart teeth-like notches 24 along the length thereof.

Locking head 12 includes a base portion 30 formed at one end of strap body 16 and a head portion 32 spaced from the base portion 30. Passageway 22 is defined between base portion 30 and head portion 22.

Head portion 32 is connected to base portion 30 by flexible connection 34 which permits pivoting of head portion 32 with respect to base portion 30. The flexible connection 34 is formed by a pair of spaced apart flexible rails 34a and 34b which also define passageway 22 therebetween.

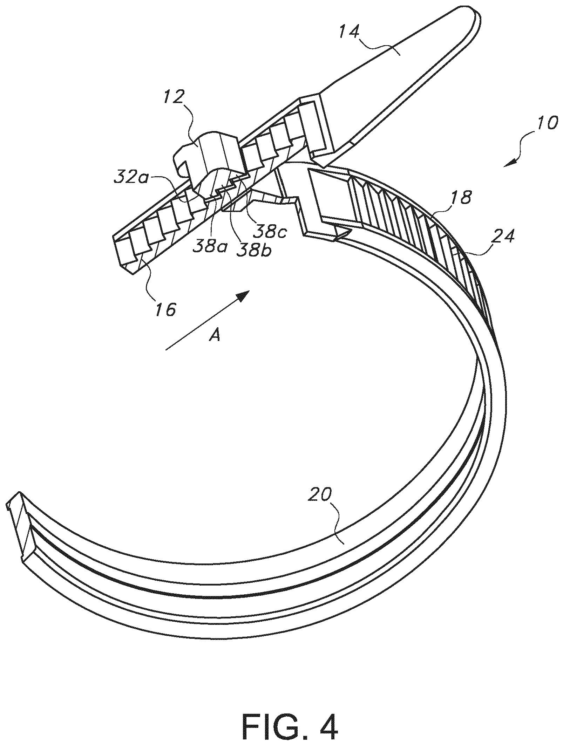

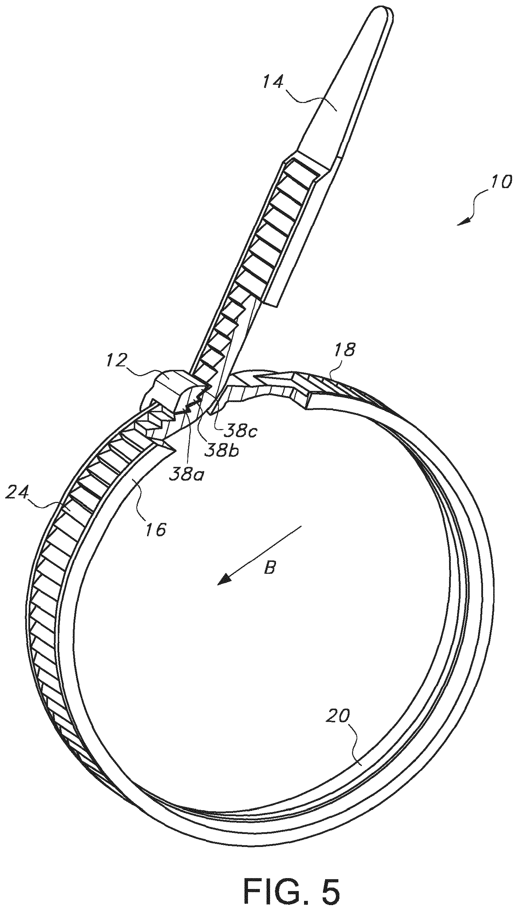

Base portion 30 and head portion 32 include mutually facing surfaces 30a and 32a. Surface 30a of base portion is generally flat so as to support the flat surface 20 of strap body 16. Surface 32a includes a plurality of teeth 38, more fully shown in Figures 4 and 5, which extend into passageway 22.

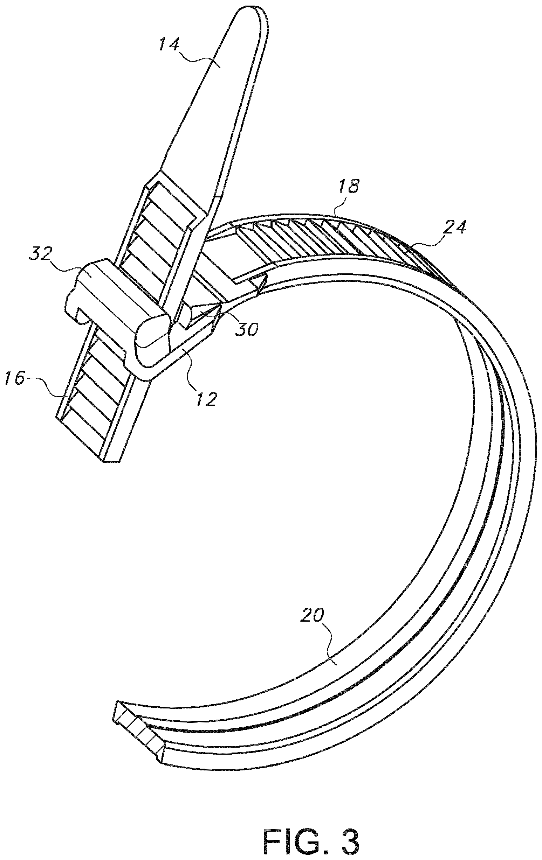

Referring additionally to Figures 3-5, three teeth 38 are shown extending into passageway 22 from surface 32a. It may be appreciated that such number is only an example.

The three teeth 38a, 38b, 38c are arranged in succession in the direction of insertion (arrow A) of the strap body into passageway 22. The last tooth 38c extends further into the passageway than the other two teeth 38a and 38b, which are successively recessed.

Tooth 38c is positioned such that upon insertion of strap body 16 into passageway 22, the single tooth 38c (or less than all of the teeth) engages the notches 24 on the strap body 16. Such engagement of the single tooth 38c with the notches 24 allows the strap body 16 to be easily inserted through the passageway 22 in the direction of arrow A with low insertion force.

Once the strap is tightly bundled, an attempt to move the strap in a direction of arrow B (Figure 5), opposite arrow A, such as by release of the tightening tension, the head portion 32 pivots inwardly towards base portion 30. The flexible rails 34a and 34b permit such rotation of head portion 32.

In the present invention, the teeth are fixed and the head portion 32 is flexible or rotatable thereby providing greater retention force.

The strap body 16 extends from the passageway 22 at an angle to the passageway of preferably about 40° to 50°. At such an angle and with the rotation of head portion 32 affected by the flexible connection, additional teeth 38a and 38b engage the notches. This engagement of multiple teeth with the notches provides a high retention force for the strap in the head. This angle also allows the low profile tie to be tensioned using conventional cable tie tools.

Thus, the present invention provides a low profile cable tie which allows insertion of the tail into the head with a low insertion force, yet once bundled, provides a high retention force for the strap in the head.

Various changes to the foregoing described and shown structures would now be evident to those skilled in the art. Accordingly, the particularly disclosed scope of the invention is set forth in the following claims.

## Claims

1. A cable tie (10) comprising:
an elongate strap having a tail (14) at one end; and
a locking head (12) at the other end of said strap, said locking head (12) having a passageway (22) therethrough for insertable receipt of the tail (14)
said strap including a planar strap surface (18.20) between said tail (14) and said locking head (12) having a plurality of notches (24) therealong;
said locking head (12) including a base portion (30) and a head portion (32), wherein said head portion (32) is connected to said base portion (30) by a flexible connection (34),
said head portion (32) including a plurality of locking teeth (38) extending into said passageway (22) for engagement with said notches (24) of said strap surface (18,20);
wherein said locking head (12) is arranged such that a number of teeth (38) less than all of said locking teeth (38) engage said notches (24) upon said insertion of said strap into said passageway (22) and wherein said head portion (32) is flexibly pivotal by said flexible connection (34) so that more than said number of said locking teeth (38) engage said notches (24) upon an attempt to withdraw said strap from said head (12), **characterised in that** said passage way (22) is formed between the head portion (32) and the base portion (30).

2. A cable tie of claim 1 wherein said head portion (32) is rotatable with respect to said base portion (30).

3. A cable tie of claim 1 or 2, wherein said head portion (32) is connected to said base portion (30) by a pair of spaced apart rails (34a, 34b).

4. A cable tie of any of the claims 1-3 said head portion (32) includes three teeth (38a, 38b, 38c) and wherein said notches (24) engage one of said teeth (38a, 38b, 38c) upon insertion of said strap into said passageway (22).

5. A cable tie of claim 4 wherein said last tooth (38c) in the direction of said insertion extends into said passageway (22) a further distance than the other two said teeth (38a, 38b).

6. A cable tie of claim 4 or 5, wherein, upon said attempt to withdraw said strap from said head (12), said locking head (12) is pivoted such that all three of said teeth (38a, 38b, 38c) engage said notches (24).

7. A cable tie of any of the claims 1-6 wherein the tail (14) extends from the head (12), upon insertion, at an angle of between 40° - 50°.

8. A cable tie of claim 1, wherein one of said locking teeth (38) engages said notches (24) upon insertion of said strap body (16) including said passageway (22) and said head portion (32) being rotatable with respect to said base portion (30) to place all of said teeth (38) into engagement with said notches (24) upon an attempt to withdraw said strap from said passageway (22).

9. A cable tie of claim 8 wherein said base portion (30) of said locking head (12) is connected to said head portion (32) by a pair of spaced apart flexible rails (34a, 34b).

10. A cable tie of claim 9 wherein said head portion (32) includes three teeth (38a, 38b, 38c) and wherein said locking head (12) is arranged such that said notches (24) engage one of said teeth (38a, 38b, 38c) upon insertion of said strap into said passageway (22).

11. A cable tie of claim 10 wherein upon attempting to withdraw said strap from said head (12), said locking head (12) is pivoted such that all three of said teeth (38a, 38b, 38c) engage said notches (24).

12. A cable tie of any of the claims 8-11 wherein the tail (14) extends from said head (12), upon insertion, at an angle of about 40° - 50°.

## Patentansprüche

1. Kabelbinder (10), umfassend:
ein gestrecktes Band, das einen Ausläufer (14) an einem Ende aufweist; und
einen Verschlusskopf (12) am anderen Ende des Bandes, wobei der Verschlusskopf (12) einen Durchgang (22) durch denselben aufweist, um den Ausläufer (14) einführbar aufzunehmen,
wobei das Band eine planare Bandoberfläche (18, 20) zwischen dem Ausläufer (14) und dem Verschlusskopf (12) umfasst, das mehrere Kerben (24) entlang desselben aufweist;
wobei der Verschlusskopf (12) einen Basisteil (30) und einen Kopfteil (32) umfasst, wobei der Kopfteil (32) mit dem Basisteil (30) durch eine flexible Verbindung (34) verbunden ist,
wobei der Kopfteil (32) mehrere Schließzähne (38) umfasst, die sich in den Durchgang (22) für den Eingriff mit den Kerben (24) der Bandoberfläche (18, 20) erstrecken;
wobei der Verschlusskopf (12) so ausgelegt ist, dass eine Anzahl von Zähnen (38), die kleiner als die Gesamtzahl der Schließzähne (38) ist, in die Kerben (24) beim Einführen des Bandes in den Durchgang (22) eingreift, und wobei der Kopfteil (32) flexibel um die flexible Verbindung (34) drehbar ist, sodass mehr als die Zahl der Schließzähne (38) in die Kerben (24) beim Versuch eingreifen, das Band aus dem Kopf zurückzuziehen, **dadurch gekennzeichnet, dass** der Durchgang (22) zwischen dem Kopfteil (32) und dem Basisteil (30) gebildet ist.

2. Kabelbinder nach Anspruch 1, wobei der Kopfteil (32) gegenüber dem Basisteil(30) drehbar ist.

3. Kabelbinder nach Anspruch 1 oder 2, wobei der Kopfteil (32) mit dem Basisteil (30) durch ein Paar von beabstandeten angeordneten Schienen (34a, 34b) verbunden ist.

4. Kabelbinder nach einem der Ansprüche 1-3, wobei der Kopfteil (32) Folgendes umfasst:
drei Zähne (38a, 38b, 38c), und wobei die Kerben (24) in einen der Zähne (38a, 38b, 38c) beim Einführen des Bandes in den Durchgang (22) eingreifen.

5. Kabelbinder nach Anspruch 4, wobei der letzte Zahn (38c) in Richtung der Einführung sich in den Durchgang (22) weiter hinein erstreckt, als die anderen zwei Zähne (38a, 38b).

6. Kabelbinder nach Anspruch 4 oder 5, wobei beim Versuch, das Band aus dem Kopf (12) zurückzuziehen, der Verschlusskopf (12) so gedreht wird, dass alle drei Zähne (38a, 38b, 38c) in die Kerben (24) eingreifen.

7. Kabelbinder nach einem der Ansprüche 1-6, wobei sich der Ausläufer (14) vom Kopf (12) aus bei der Einführung unter einem Winkel zwischen 40° und 50° erstreckt.

8. Kabelbinder nach Anspruch 1, wobei einer der Schließzähne (38) in die Kerben (24) beim Einführen des Bandkörpers (16) eingreift, der den Durchgang (22) umfasst, und wobei der Kopfteil (32) gegenüber dem Basisteil (30) drehbar ist, um alle diese Zähne (38) in den Eingriff mit den Kerben (24) bei dem Versuch zu bringen, das Band aus dem Durchgang (22) zurückzuziehen.

9. Kabelbinder nach Anspruch 8, wobei der Basisteil (30) des Verschlusskopfes (12) mit dem Kopfteil (32) durch ein Paar von beabstandeten angeordneten flexiblen Schienen (34a, 34b) verbunden ist.

10. Kabelbinder nach Anspruch 9, wobei der Kopfteil (32) drei Zähne (38a, 38b, 38c) umfasst und wobei der Verschlusskopf (12) so angeordnet ist, dass die Kerben (24) in einen der Zähne (38a, 38b, 38c) beim Einführen des Bandes in den Durchgang (22) eingreifen.

11. Kabelbinder nach Anspruch 10, wobei beim Versuch, das Band aus dem Kopf (12) zurückzuziehen, der Verschlusskopf (12) so gedreht wird, dass alle drei Zähne (38a, 38b, 38c) in die Kerben (24) eingreifen.

12. Kabelbinder nach Anspruch 10, wobei sich der Ausläufer (14) vom Kopf (12) aus bei der Einführung unter einem Winkel zwischen 40° und 50° erstreckt.

## Revendications

1. Attache de câble (10) comprenant :
une sangle allongée ayant une queue (14) au niveau d'une extrémité ; et
une tête de blocage (12) au niveau de l'autre extrémité de ladite sangle, ladite tête de blocage (12) ayant une voie de passage (22) à travers cette dernière pour recevoir par insertion la queue (14),
ladite sangle comprenant une surface de sangle planaire (18, 20) entre ladite queue (14) et ladite tête de blocage (12) ayant une pluralité d'encoches (24) le long de cette dernière ;
ladite tête de blocage (12) comprenant une partie de base (30) et une partie de tête (32), dans laquelle ladite partie de tête (32) est raccordée à ladite partie de base (30) par un raccordement souple (34),
ladite partie de tête (32) comprenant une pluralité de dents de blocage (38) s'étendant dans ladite voie de passage (22) pour la mise en prise avec lesdites encoches (24) de ladite surface de sangle (18, 20) ;
dans laquelle ladite tête de blocage (12) est agencée de sorte qu'un certain nombre de dents (38) inférieur à toutes lesdites dents de blocage (38) met en prise lesdites encoches (24) suite à ladite insertion de ladite sangle dans ladite voie de passage (22) et dans laquelle ladite partie de tête (32) peut être pivotée de manière flexible par ledit raccordement souple (34) de sorte qu'un nombre supérieur audit nombre desdites dents de blocage (38) met en prise lesdites encoches (24) suite à une tentative de retirer ladite sangle de ladite tête (12), **caractérisée en ce que** ladite voie de passage (22) est formée entre la partie de tête (32) et la partie de base (30).

2. Attache de câble selon la revendication 1, dans laquelle ladite partie de tête (32) peut tourner par rapport à ladite partie de base (30).

3. Attache de câble selon la revendication 1 ou 2, dans laquelle ladite partie de tête (32) est raccordée à ladite partie de base (30) par une paire de rails (34a, 34b) espacés.

4. Attache de câble selon l'une quelconque des revendications 1 à 3, ladite partie de tête (32) comprend trois dents (38a, 38b, 38c) et dans laquelle lesdites encoches (24) mettent en prise l'une desdites dents (38a, 38b, 38c) suite à l'insertion de ladite sangle dans ladite voie de passage (22).

5. Attache de câble selon la revendication 4, dans laquelle ladite dernière dent (38c) dans la direction de ladite insertion s'étend dans ladite voie de passage (22) sur une distance plus importante que les deux autres desdites dents (38a, 38b).

6. Attache de câble selon la revendication 4 ou 5, dans laquelle, suite à ladite tentative de retirer ladite sangle de ladite tête (12), ladite tête de blocage (12) est pivotée de sorte que les trois desdites dents (38a, 38b, 38c) mettent en prise lesdites encoches (24).

7. Attache de câble selon l'une quelconque des revendications 1 à 6, dans laquelle la queue (14) s'étend à partir de la tête (12), suite à l'insertion, à un angle compris entre 40° et 50°.

8. Attache de câble selon la revendication 1, dans laquelle :
l'une desdites dents de blocage (38) met en prise lesdites encoches (24) suite à l'insertion dudit corps de sangle (16) comprenant ladite voie de passage (22) et ladite partie de tête (32) pouvant tourner par rapport à ladite partie de base (30) pour placer la totalité desdites dents (38) en mise en prise avec lesdites encoches (24) suite à une tentative de retirer ladite sangle de ladite voie de passage (22).

9. Attache de câble selon la revendication 8, dans laquelle ladite partie de base (30) de ladite tête de blocage (12) est raccordée à ladite partie de tête (32) par une paire de rails flexibles (34a, 34b) espacés.

10. Attache de câble selon la revendication 9, dans laquelle ladite partie de tête (32) comprend trois dents (38a, 38b, 38c) et dans laquelle ladite tête de blocage (12) est agencée de sorte que lesdites encoches (24) mettent en prise l'une desdites dents (38a, 38b, 38c) suite à l'insertion de ladite sangle dans ladite voie de passage (22).

11. Attache de câble selon la revendication 10, dans laquelle suite à la tentative de retirer de ladite sangle de ladite tête (12), ladite tête de blocage (12) est pivotée de sorte que les trois desdites dents (38a, 38b, 38c) mettent en prise lesdites encoches (24).

12. Attache de câble selon l'une quelconque des revendications 8 à 11, dans laquelle la queue (14) s'étend à partir de ladite tête (12), suite à l'insertion, à un angle de 40° - 50°.
